(19) **Europäisches Patentamt**
**European Patent Office**
**Office européen des brevets**

(11) **EP 2 187 363 B1**

(12) **EUROPEAN PATENT SPECIFICATION**

(45) Date of publication and mention
of the grant of the patent:
**11.04.2012 Bulletin 2012/15**

(51) Int Cl.:
***G07F 7/10*** *(2006.01)*

(21) Application number: **08291060.5**

(22) Date of filing: **12.11.2008**

(54) **Personal identification number distribution device and method**

Vorrichtung und Verfahren zur Verteilung von Personenidentifizierungsnummern

Dispositif et procédé de distribution de numéros d'identification personnels

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**19.05.2010 Bulletin 2010/20**

(60) Divisional application:
**12157590.6**

(73) Proprietor: **Oberthur Technologies Denmark A/S DK-2610 Rodovre (DK)**

(72) Inventors:
• **Aage, Peter**
**DK-2830 Virum (DK)**

• **Timm, Carsten**
**DK-1802 Frederiksberg C (DK)**

(74) Representative: **Kurtz, Laurent Charles Edmond Santarelli,**
**14 avenue de la Grande Armée,**
**BP 237**
**75822 Paris Cedex 17 (FR)**

(56) References cited:
**EP-A1- 1 195 973**      **EP-A2- 0 772 164**
**WO-A1-01/35685**      **WO-A1-2006/056826**
**US-A1- 2006 168 657**

**Description**

The present invention relates to a personal identification number (PIN) distribution device and method.

When a customer holds an account, for example a bank account, this account is associated with one or more transaction instruments, debit or credit cards for example. To use a card to make a payment, the customer has to know the PIN associated with the card. The standard procedure for delivering a new card to a customer is to send the card through the post or to the bank where the customer's account is held, followed after a few days by a letter containing the PIN associated with the card.

This method of distributing PIN numbers has several drawbacks. First, both the card and the PIN numbers are delivered by standard mail with a few days difference. This gives the following possibilities for a "Man In The Middle" ("MITM") attack:

- MITM can pick up card and PIN number, activate the card and use it or
- MITM can copy the card and copy the PIN number.

Moreover, it is not possible to identify who is actually opening the letter at the recipient's address. Furthermore, the distribution of the PIN number is slow, expensive, and limited to the home address of the cardholder. As long as the letter containing the PIN number is not properly destroyed, there is a risk that a malicious third party finds it. Because PIN numbers are not easy to keep in mind, people may forget it and then stop using their cards. But, if people keep a copy of the PIN number near the card, for example in a wallet of a hand bag, the risks of forgery or use by a malicious third party is increased. For the card issuer, the current mail delivery method used to distribute the PIN number does not provide any tracking possibility. If the cardholder pretends the PIN mailer has not been delivered, the issuer has no information about where the PIN mailer is (for example, stolen, lost or never sent). Because the PIN number and cards are sent via the same channel, i.e., the regular mail, a third party, inside or outside the household, may easily access both the card and the PIN number.

It is known from WO 2006 56 826, to provide the customer with their PIN numbers via the internet or via another communication channels such as a short message sent to the customer's mobile phone.

However, pushing the PIN number to the cardholder has numerous drawbacks. First, the customer may leave the message containing the PIN number available on its computer or his mobile phone because he did not request its transmission. Second, because the PIN number is delivered without being requested by the customer, it might be delivered to a lost, stolen or rarely used telephone or it might be destroyed as a "spam" (unsolicited message). Moreover, this method does not imply an acknowledgement of receipt sent by the customer. Furthermore, a customer who has ordered more than one card receives more than one PIN and can be confused in associating PIN numbers and cards.

The present invention aims to remedy these drawbacks.

Patent application No. US 2006/168 657 describes a solution to provide a user device with a set of access codes. According to this solution, an ID code is sent to the user; in a server, the ID code is received from the user in an SMS message and used in order to retrieve a key for encrypting the set of access codes. The encrypted set of access codes is sent to the user in an SMS message.

The present invention relates to a method of distributing a personal code as defined in appended claim 1.

Thanks to these features, the issuer and the user benefit of some significant advantages in comparison to the existing mailed delivered PIN.

For instance, sending a personal code through an electronic channel (for example a mobile telephone network) creates great savings for the issuer since a number of costs disappear such as mailer letter, printing, stock administration, labor, printers, maintenance, stamps.

Moreover, because almost every user of financial instruments has a mobile phone, the user has the opportunity to retrieve his/her personal code anywhere and at any time.

A third party who would know the request code would not be able to validly request and then receive the personal code.

The method according to the present invention also provides the issuer with tracking features because the user has to request the personal identification number. The issuer has the opportunity to know if the personal code has been requested and received by the cardholder.

Moreover, because the personal code and the associated financial instrument are preferentially not sent through the same channel, the security is enhanced. Indeed, it is much more difficult for a third party to access both the financial instrument and the personal code. Furthermore, the method of the present invention may authenticate who receives the personal code because the user may be identified when requesting the personal code.

In particular embodiments, during the step of sending the request code, a financial instrument is sent to a user via the first channel together with the request code associated with said financial instrument. Thanks to these features, the user may obtain the personal code as soon as he/she receives the financial instrument. Thus, the user does not need to wait a few days before being allowed to use this financial instrument. In case the financial instrument is a card and the request code is provided together with the card, the personal code, i.e., the PIN, is potentially available to the cardholder as soon as the card is received and can be retrieved at any time,

According to particular features, the method according to the present invention, as succinctly set forth above further includes a step of decrypting the personal code using the request code as a decryption key. Thanks to these features, each recorded personal code is protected by a specific key that only the user knows.

According to particular features, both the second and third channels are secured channels. Thanks to these features, the transmission of the personal code is protected.

According to particular features, the first channel is a mail delivery channel. The delivery of the personal code is fast, easy and may be initiated from everywhere, provided that a mobile telephone network signal can be accessed.

Thanks to the fact that, both the second and third channels are a network for transmitting short messages, the delivery of the personal code is fast easy and may be initiated from everywhere, provided that a mobile telephone network signal can be accessed. Moreover, the short message containing the personal code may be stored in a telephone memory.

According to another aspect, the present invention relates to an information storage means that can be read by a computer or a microprocessor storing instructions of a computer program, that permits the implementation of the method of the present invention as briefly set forth above.

According to yet another aspect, the present invention concerns a computer program loadable into a computer system, said program containing instructions enabling the implementation of the method of the present invention as briefly set forth above, when that program is loaded and executed by a computer system.

As the advantages, objectives and particular features of this information storage means, and of this computer program are similar to those of the method of distributing PIN, as briefly set forth above, they are not repeated here.

Other advantages, aims and features of the present invention will emerge from the following description, given, with an explanatory purpose that is in no way limiting, with respect to the accompanying drawings, in which:

- figure 1 represents, in the form of a block diagram, a particular embodiment of the device according to the present invention,
- figure 2 shows the fields of a PIN request message and of a record in a database and
- figure 3 represents steps performed for implementing a particular embodiment of the method according to the present invention.

Even if, in the following description, the only described financial instrument is a card, the present invention is not limited to such kind of financial instrument. To the contrary, the present invention encompasses any kind of financial instruments, for example wire transfer codes. Similarly, the description only relates to a specific personal secret code called "PIN", which is usually a sequence of numbers. However, the present invention is not limited to such kind of secret personal code or password but extends to any kind of personal code including a sequence of symbols and particularly of alphanumerical symbols.

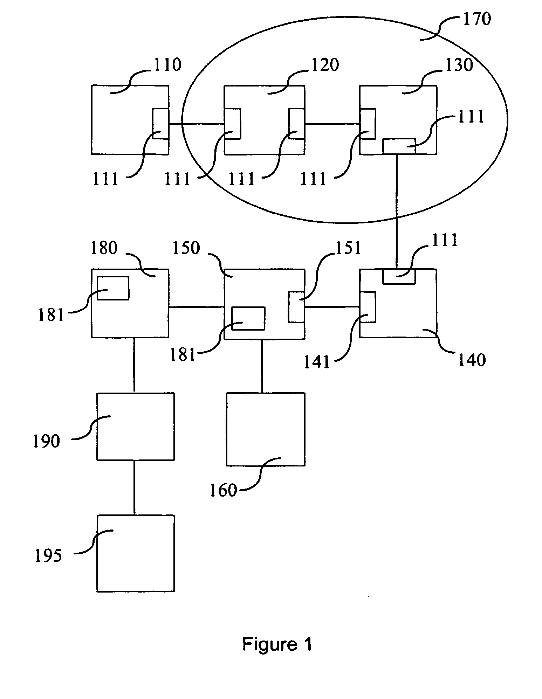

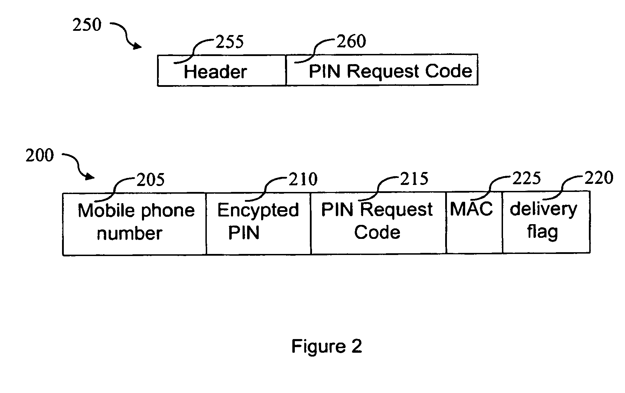

As shown on figure 1, a PIN distribution server 180 contains a table of records 181. As shown on the lower line of figure 2, each record 200 in this table relates to one and only one card and contains at least the following information: a customer mobile phone number 205, the PIN 210 for that card, a PIN request code 215, a MAC 225 and a delivery flag 220. The PIN request code 215 field is the "key field" of the table. The PIN request code 215 has a value that never appears more than once within the table. Thus a given PIN request code 215 identifies one and only one record. The mobile phone subscriber number 205 is the phone number from which the PIN distribution server 180 expects to receive the associated PIN request code 215 and to which it will send the PIN 210. The card issuer 195 will have obtained this mobile phone number 205 from all those customers who elect to have their PINs distributed by SMS (acronym for "short message system").

The delivery flag 220 is initially set at the value "undelivered" and is set to the value "delivered" when the delivery of the PIN to the customer is confirmed.

The PIN request code 215 is provided by a data provider 190. In variants, the PIN request code is generated by the PIN Distribution Server 180 or supplied by the issuer 195.

The PIN 210 is encrypted by the data provider 190 according to the following encryption function:

$$\text{encrypted PIN} = \text{encrypt}(\text{encrypt}(\text{PIN, zonekey}), \text{PIN-request-code})$$

where "encrypt(x,y)" is an encryption function, for example a DES (acronym for "Data Encryption Standard") encryption function, with two arguments. The first argument is the data to be encrypted, i.e., the PIN, and the second argument is the key to use for the encryption. As can be seen, this is a double encryption in which the PIN request code is the key for the second encryption occurrence. The decryption function allows an SMS content server 150 or a hardware security module 160 to recover the plain text according to the following decryption function:

decrypted PIN = decrypt(decrypt(encrypted PIN, PIN-request-code) zonekey)
where "decrypt(x,y)" is the decryption function reciprocal of encrypt(x,y).

As can be understood, the device and method according to the present invention both add an extra measure of security as compared to simple encryption. In order to decrypt the PIN, a fraudster needs two elements, the PIN request code and the zone key, instead of just the zone key.

The PIN delivery record is further protected by encrypting at least the PIN field and computing a Message Authentication Code ("MAC") 225 over the whole record. The MAC 225 is held in the table with the corresponding record 200 and is a well known means of ensuring the integrity of the data in the related record.

A new or replacement card to be sent to a customer is attached to what is known as a "carrier", i.e., a piece of card or paper designed to be handled automatically and onto which is printed the destination address of the card plus any other information the card issuer may desire to communicate to the customer. In particular, according to particular embodiments of the present invention, the PIN request code is printed onto this carrier. The carrier, with the card attached, is placed in an envelope and sent through the post to the customer.

In order to obtain the PIN that is necessary for using the financial instrument, i.e., the card, the customer composes an SMS message 250 (see the upper line of figure 2) containing a header 255 and, in the SMS body, the PIN request code 260 that the customer received with the card.

The customer sends this SMS message 250 to a telephone number that is either indicated on the carrier or provided in some other way, for example via the internet. The SMS message 250 is routed from his/her mobile phone, also called "Mobile Station" ("MS") 110, to a SMS service centre ("SMSC") 140, via a base station 120 and a switching centre 130 of a mobile telephone network 170. The integrity and security of the message across the mobile telephone network 170 is provided by the mobile operator's security system 111. The SMSC 140 decrypts the message using the mobile operator's security system 111, and re-encrypts it using a security means 141 agreed beforehand with the operator of the SMS content server 150. The SMSC 140 then forwards the newly encrypted PIN request code 215, along with mobile phone number 205 from which the SMS came, to the SMS content server 150.

The SMS content server 150 decrypts the PIN request code 215 using the agreed security means 151. The SMS content server 150 holds a copy of table 181. The SMS content server 150 searches the table 181 for a record that matches the PIN request code 215.

When a matching record is found, the SMS content server 150 checks the requestor's phone number against the phone number in the matching record. In the event of no match being found for the PIN request code or in the event the requestor's number not corresponding to the phone number in the matched record, in particular embodiments, an error message is composed and returned to the requestor.

The SMS content server 150 uses a hardware security module 160 to verify the Message Authentication Code 225. If the verification of the Message Authentication Code succeeds, the SMS content server 150 successively uses the PIN request code and the hardware security module 160 to decrypt the PIN in the matching record. The SMS content server 150 then generates an SMS message of which content is the PIN, and of which destination address is the mobile number 205 found in the record. The SMS content server 150 encrypts the SMS message using security means 151 and sends it back to the SMSC 140. The SMSC 140 decrypts the PIN using the agreed security means 141 and sends the SMS message with the PIN to the customer's Mobile Station 110. The message integrity and security is provided by the mobile operator's security system 111.

The SMS delivery reporting system allows the SMSC 140 to keep track of precisely which PINs have been requested and which have been delivered.

Once the customer has memorized the PIN in his/her own memory, he/she is supposed to delete the PIN message from the memory of his/her mobile phone. In this way, the length of time that the PIN remains accessible in the mobile phone memory is kept to a minimum.

For the card issuer, receiving the PIN request code means that the customer acknowledges receipt of the card.

A customer who has ordered more than one card may be expecting more than one PIN 210, the PIN request code 215 unambiguously identifies which code corresponds to which card.

With an unpredictable PIN request code 215, a malicious third party needs to find the correct phone and the PIN request code 215. When a security conscious user receives the card and the PIN request code 215, he/she memorizes the PIN request code 215 and then destroys its printed trace. This increases security by reducing the length of time that the printed trace of the PIN request code 215 remains accessible to a third party.

As stated above, the method of the present invention allows a financial instrument issuer to distribute the associated PIN 210 to customers' mobile phone through the mobile telephone network 170 using short message system ("SMS").

Sending a PIN 210 through the SMS channel generates great savings for the issuer since a number of costs no longer exist such as: PIN mailer letter, printing, stock administration, labour, printers, maintenance, stamps.

The use of the present invention also provides better service and convenience to the user. Because everybody has a mobile phone and uses it extensively as a new interface to chat, do banking operations, purchase services and content, having the PIN 210 being sent directly to the mobile phone which is always carried by the cardholder is a clear benefit for the user. The cardholder has the opportunity to retrieve his/her PIN anywhere, given the telephone network can be accessed. Moreover, the PIN 210 is available to the cardholder as soon as he/she receives the card. In particular embodiments, the PIN is kept in the table 181 and the user may retrieve the PIN many times. In other embodiments, the PIN data is deleted or the access to the PIN is forbidden once the user has received it for the first time.

As compared to the prior art systems, it is an added security feature to send the new PIN 210 via a separate channel. Indeed, it is more difficult for a malicious third party to access both the card and the PIN 210, since they don't follow the same channels. Moreover, the recipient of the PIN 210 is identified and/or authenticated by his/her mobile telephone number 205.

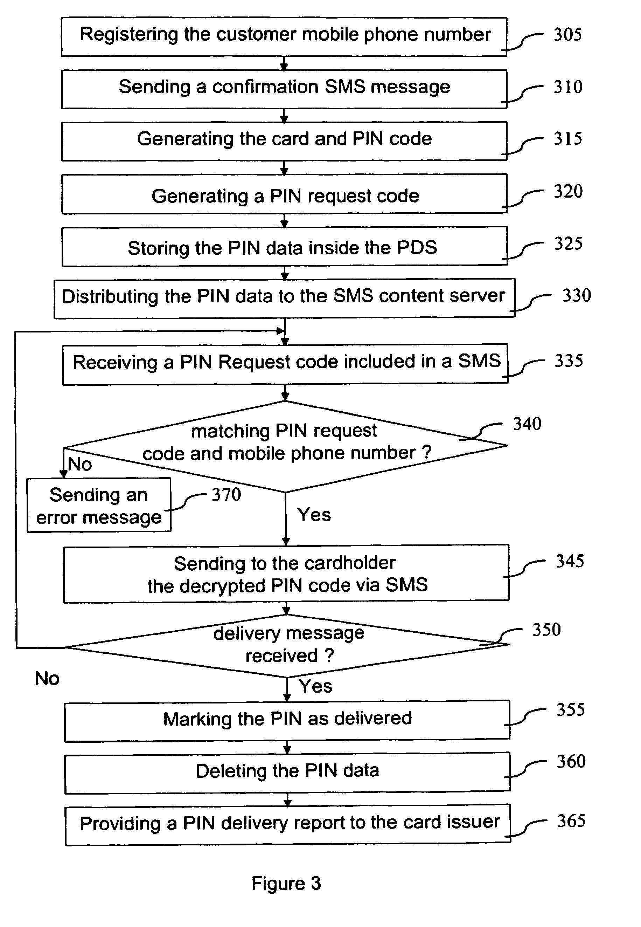

As can be seen in figure 3, in a particular embodiment, the method of the present invention begins by a step 305 of registering the customer's mobile phone number when the customer orders a new card.

Optionally, the card issuer sends a short message requiring a response to the registered mobile phone number to check that it is correct, during step 310.

During step 315, the card and the associated PIN are generated using conventional methods.

During step 320, a unique SMS keyword, called "PIN request code", is generated per PIN/card instance. This is the keyword that shall be sent by the cardholder willing to receive the PIN. The keyword is unique because a cardholder may order several cards at the same time. The keyword is also sent with the card, printed on the carrier (delivery letter accompanying the card).

During step 325, the PIN data (Mobile number, encrypted PIN, delivery reference, delivery flag) is stored on a PIN distribution server 180 that keeps track of the delivery. Data is associated with a MAC to ensure integrity.

During step 330, the PIN data (Mobile number, encrypted PIN, PIN request code) is distributed to a SMS content server. The data is associated with a MAC to avoid changes in data (primarily mobile number).

During step 335, the cardholder requests the PIN by sending an SMS including the PIN request code to a telephone number specified by the issuer.

During step 340, the PIN request code of the received SMS and the phone number associated to the received SMS are searched in the table of records to determine if there is a PIN associated to them in a record of the table stored in the content server. If no, during step 370, an error message is sent back to the mobile phone number and, optionally, a report notifying the missed attempt is sent to the issuer. If there is a PIN associated to the PIN request code and phone number, during step 345, the PIN is decrypted and sent to the Mobile number.

During step 350, it is determined if a delivery report is received from the mobile phone network operator. If no, the process returns to step 335.

If a delivery report is received, during step 355, the PIN is marked as "delivered" in the record stored in the content server. Optionally, during step 360, the PIN data is deleted from the content server after the delivery is confirmed. In other words, optionally, the PIN cannot be delivered twice by the content server.

During step 365, the content server provides a delivery report including a delivery reference, hour and date of delivery to the PIN Distribution server 180 which reports back to the issuer 195 that the PIN is delivered to the customer. This delivery report is provided by the telephone network operator without cardholder action.

There are basically two ways to capture the mobile phone number from which the first SMS is sent:

- the direct method using a validation SMS: the customer gives the mobile phone number during the registration or ordering process with physical presence or using an online system. When the number is provided/entered by the customer, a test message is sent to the mobile phone number. The customer must then provide the content of this test message (a word or a number) in order to confirm the validity of the number. This process is known from mobile phone networks operators.
- the match-by-reference method: by creating a match reference, typically a number, that is given to the customer who is supposed to send the number in an SMS to a telephone number specified by the issuer. The same number must be included in the PIN distribution order from the issuer. When the SMS and the order are received by the PIN server, the reference number is matched and the GSM number of the received SMS is registered in the distribution order.

Any number of distribution profiles (known as "electronic carriers") can be defined in the PIN Distribution Server. Each carrier can contain different settings and texts to be sent to the receiver.

When sending a distribution order (of one PIN), the carrier number must be provided.

In variants, a delay of delivery is introduced to ensure that the card is delivered before a PIN can be delivered.

The period where the PIN is available for request and delivery may also be limited.

For each carrier it is possible to define a Data Ready Notification Text. This message is intended to inform the customer that the PIN can now be retrieved from the PIN Server.

By using a specific SMS feature, it is possible to overwrite the SMS containing the PIN earlier delivered to the cardholder. Note that the overwrite SMS feature is provided by the SMS standard. For example, that feature is used when a telephone network operator sends an SMS to notify a waiting voice mail message, in order to avoid filling the SMS inbox with voicemail notifications. This overwrite message is sent after a specified period with a specified overwrite text. Thank to this feature, even if the user has kept his/her PIN in the telephone memory, it is possible to delete it by overwriting text. The PIN security is thus enhanced.

To avoid brute force attacks or keyword guessing it is possible to black list GSM numbers for a period if too many wrong requests are received. A message can be sent when the number is banned.

Another system policy is the period of time where delivery information is stored in the system. As noted above, PIN and keyword may always be deleted when delivered.

The system supports a number of PIN settings in order to support different encryption methods and key versions.

Many GSM-SMS (gateway) operators offer to pick up SMS via so called "short numbers". A short number is typically three to five digits. It is convenient for the cardholder to request the PIN via a short number because it is easier to enter the number.

The PIN server always sends via a direct SMSC connection in order to avoid any eaves dropping prior to the transmission.

All messages have a track of delivery - meaning that it is logged if the message is delivered. The mechanism used for this is SMS delivery reports, which is a feature of the mobile telephone networks. If requested, the phone responds with a delivery report when a SMS is received.

When the system has generated the PIN request code, only a hash (for example, MD5 or SHA) is stored in the systems.

The PIN data is double encrypted using a customer key and the keyword. This ensures that data can only be decrypted and sent when the correct keyword is provided by the cardholder.

All data stored in the PIN Server is secured with a MAC ("Message Authentication Code"). The MAC is checked prior to transmitting the PIN. This ensures that nobody has altered data, and particularly the mobile phone number.

## Claims

1.  A method of distributing a personal code to a user of a financial instrument associated with said personal code, comprising, after a step of sending to the user, via a first channel, a request code associated with said personal code,

    - a step (335) of receiving said request code (260) via a second channel,

    **characterised by**:

    - a step of retrieving the personal code (210) associated with said request code 260 and
    - a step of sending to the user the retrieved personal code (210) via a third channel,

    wherein the second channel and the third channel are a mobile telephone network (170), wherein the second channel is a network for transmitting short messages and wherein the step of retrieving the personal code includes a step of checking the user mobile phone number (205) in the second channel.

2.  A method according to claim 1, wherein, during the step of sending the request code, a financial instrument is sent to a user via the first channel together with the request code associated with said financial instrument.

3.  A method according to either one of claims 1 to 2, that includes a step of decrypting the personal code (210) using the request code (260) as a decryption key.

4.  A method according to either one of claims 1 to 3, wherein both the second and third channels are secured channels.

5.  A method according to either one of claims 1 to 4, wherein the first channel is a mail delivery channel.

6.  An information storage means that can be read by a computer or a microprocessor storing instructions of a computer program, that permits the implementation of a method according to any one of claims 1 to 5.

7. A computer program loadable into a computer system, said program containing instructions enabling the implementation of the method according to any one of claims 1 to 5, when that program is loaded and executed by a computer system.

**Patentansprüche**

1. Verfahren zur Verteilung eines persönlichen Codes an einen Benutzer eines Finanzinstruments, zu dem der persönliche Code gehört, das nach einem Schritt des Sendens eines Anforderungscodes, der zu dem persönlichen Code gehört, an einen Benutzer über einen ersten Kanal umfasst:

   - einen Schritt (335) des Empfangens des Anforderungscodes (260) über einen zweiten Kanal,

   **gekennzeichnet durch**:

   - einen Schritt des Abrufens des persönlichen Codes (210), der zu dem Anforderungscode (260) gehört, und
   - einen Schritt des Sendens des abgerufenen persönlichen Codes (210) über einen dritten Kanal an den Benutzer,

   wobei der zweite Kanal und der dritte Kanal ein Mobiltelefonnetz (170) sind, wobei der zweite Kanal ein Netzwerk zum Übertragen von Kurznachrichten ist, und wobei der Schritt des Abrufens des persönlichen Codes einen Schritt des Prüfens der Mobiltelefonnummer (205) des Benutzers in dem zweiten Kanal umfasst.

2. Verfahren nach Anspruch 1, wobei während des Schritts des Sendens des Anforderungscodes ein Finanzinstrument zusammen mit dem Anforderungscode, der zu dem Finanzinstrument gehört, über den ersten Kanal an einen Benutzer gesendet wird.

3. Verfahren nach einem der Ansprüche 1 bis 2, das einen Schritt des Entschlüsselns des persönlichen Codes (210) unter Verwendung des Anforderungscodes (260) als einen Entschlüsselungsschlüssel umfasst.

4. Verfahren nach einem der Ansprüche 1 bis 3, wobei sowohl der zweite als auch der dritte Kanal sichere Kanäle sind.

5. Verfahren nach einem der Ansprüche 1 bis 4, wobei der erste Kanal ein Postzustellungskanal ist.

6. Informationsspeichermittel, das von einem Computer oder einem Mikroprozessor gelesen werden kann, das Anweisungen eines Computerprogramms speichert, das die Implementierung eines Verfahrens nach einem der Ansprüche 1 bis 5 erlaubt.

7. Computerprogrammprodukt, das in ein Computersystem ladbar ist, wobei das Programm Anweisungen enthält, die die Implementierung des Verfahrens nach einem der Ansprüche 1 bis 5 ermöglichen, wenn das Programm von einem Computersystem geladen und ausgeführt wird.

**Revendications**

1. Procédé de distribution d'un code personnel à un utilisateur d'un instrument financier associé audit code personnel, comprenant, après une étape consistant à envoyer à l'utilisateur, via un premier canal, un code de demande associé audit code personnel:

   - une étape (335) consistant à recevoir ledit code de demande (260) via un deuxième canal ;

   **caractérisé par** :

   - une étape consistant à obtenir le code personnel (210) associé audit code de demande (260) ; et
   - une étape consistant à envoyer à l'utilisateur le code personnel (210) ainsi obtenu, via un troisième canal ;

   dans lequel le deuxième canal et le troisième canal constituent un réseau téléphonique mobile (170), dans lequel le deuxième canal est un réseau destiné à transmettre des messages courts et dans lequel l'étape d'obtention du code personnel comprend une étape consistant à vérifier le numéro de téléphone mobile (205) de l'utilisateur sur le deuxième canal.

2. Procédé selon la revendication 1, dans lequel, au cours de l'étape d'envoi du code de demande, un instrument financier est envoyé à un utilisateur via le premier canal, avec le code de demande associé audit instrument financier.

3. Procédé selon l'une quelconque des revendications 1 et 2, comprenant une étape consistant à déchiffrer le code personnel (210) en utilisant le code de demande (260) comme clef de déchiffrement.

4. Procédé selon l'une quelconque des revendications 1 à 3, dans lequel le deuxième et le troisième canal sont tous deux des canaux sécurisés.

5. Procédé selon l'une quelconque des revendications 1 à 4, dans lequel le premier canal est un canal de remise de courrier.

6. Moyen de stockage d'informations qui peut être lu par un ordinateur ou un microprocesseur, stockant des instructions d'un programme d'ordinateur qui permet la mise en oeuvre d'un procédé selon l'une quelconque des revendications 1 à 5.

7. Programme d'ordinateur pouvant être chargé dans un système informatique, ledit programme contenant des instructions permettant la mise en oeuvre du procédé selon l'une quelconque des revendications 1 à 5, lorsque le programme est chargé et exécuté par un système informatique.

Figure 1

250 ⟍

╭255        ╭260

| Header | PIN Request Code |
|--------|------------------|

200 ⟍

╭205        ╭210        ╭215        ╭225   ╭220

| Mobile phone number | Encypted PIN | PIN Request Code | MAC | delivery flag |
|---------------------|--------------|------------------|-----|---------------|

Figure 2

Registering the customer mobile phone number — 305

Sending a confirmation SMS message — 310

Generating the card and PIN code — 315

Generating a PIN request code — 320

Storing the PIN data inside the PDS — 325

Distributing the PIN data to the SMS content server — 330

Receiving a PIN Request code included in a SMS — 335

matching PIN request code and mobile phone number ? — 340

No

Sending an error message — 370

Yes

Sending to the cardholder the decrypted PIN code via SMS — 345

delivery message received ? — 350

No

Yes

Marking the PIN as delivered — 355

Deleting the PIN data — 360

Providing a PIN delivery report to the card issuer — 365

Figure 3

**EP 2 187 363 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200656826 A
- US 2006168657 A